# EUROPÄISCHE PATENTSCHRIFT

(11) **EP 2 941 685 B1**
(45) Veröffentlichungstag und Bekanntmachung des Hinweises auf die Patenterteilung: **26.02.2020**
(21) Anmeldenummer: 13811428.5
(22) Anmeldetag: 16.12.2013
(51) Int. Cl.: G06F 3/0488

(54) **BEDIENVERFAHREN UND BEDIENSYSTEM IN EINEM FAHRZEUG**
OPERATING METHOD AND OPERATING SYSTEM IN A VEHICLE
PROCÉDÉ DE COMMANDE ET SYSTÈME DE COMMANDE POUR VÉHICULE

(30) Priorität: 05.01.2013 DE 102013000110
(43) Veröffentlichungstag der Anmeldung: 11.11.2015
(73) Patentinhaber: Volkswagen Aktiengesellschaft, 38440 Wolfsburg (DE)
(72) Erfinder: MICHAELIS, Jan, 14193 Berlin (DE)
(86) Internationale Anmeldenummer: PCT/EP2013/076691
(87) Internationale Veröffentlichungsnummer: WO 2014/106570

(56) Entgegenhaltungen:
- WO-A2-2012/084123
- WO-A2-2012/110021
- FR-A1- 2 915 017
- US-A1- 2012 272 193

## Beschreibung

Die vorliegende Erfindung betrifft ein Bedienverfahren und ein Bediensystem in einem Fahrzeug. Bei dem Bedienverfahren werden auf einer ersten Anzeigefläche, die im Innenraum des Fahrzeugs im Blickfeld einer Person angeordnet ist, die auf einem Fahrersitz des Fahrzeugs sitzt, erste Graphikdaten angezeigt. Auf einer zweiten Anzeigefläche, die eine berührungsempfindliche Oberfläche aufweist und die getrennt von der ersten Anzeigefläche in Reichweite der Person angeordnet ist, die auf dem Fahrersitz sitzt, werden zweite Graphikdaten angezeigt, die zumindest eine Schaltfläche darstellen. Das erfindungsgemäße Bediensystem weist eine Steuervorrichtung auf, die mit der ersten und der zweiten Anzeigefläche gekoppelt ist, mittels welcher erste und zweite Graphikdaten für die Anzeigen auf den Anzeigeflächen erzeugbar sind und mittels welcher Eingaben über die berührungsempfindliche Oberfläche erfassbar sind. Dabei stellen die zweiten Graphikdaten zumindest eine Schaltfläche dar.

Ursprünglich wurden die verschiedenen in einem Kraftfahrzeug vorgesehenen Einrichtungen über separate Bedienelemente bedient. Beispielsweise gab es Drehschalter zum Einstellen der Lüftung sowie der Temperatur, Schalter zum Einstellen der verschiedenen Lüftungsdüsen, Schalter zum Bedienen der Beleuchtungseinrichtungen für den Innenraum des Fahrzeugs, entsprechende Schalter für die Beleuchtungs- und Scheinwerfereinrichtungen außen am Fahrzeug und Bedienelemente für ein Radio oder einen CD-Spieler. Bei modernen Kraftfahrzeugen sind mittlerweile so viele Einrichtungen zum Einstellen verschiedener Fahrzeugfunktionen, Informationssysteme, einschließlich Fahrerassistenzsysteme und Unterhaltungssysteme, vorgesehen, dass es nicht mehr zweckmäßig ist, für alle Fahrzeugeinrichtungen separate Bedienelemente vorzusehen. Aus diesem Grund erfolgt die Bedienung der vielfältigen Fahrzeugeinrichtungen über ein einheitliches Bedienkonzept mit wenigen Bedienelementen, die in Verbindung mit einer Anzeigevorrichtung bedient werden.

Die Bedienung der verschiedenen Einrichtungen des Fahrzeugs und die Aufnahme der angezeigten Informationen, die von diesen Einrichtungen geliefert werden, sollen jedoch die Aufmerksamkeit des Fahrers des Fahrzeugs so wenig wie möglich beanspruchen. Es ist daher wünschenswert, die Informationen im Fahrzeug so darzustellen, dass sie schnell und intuitiv vom Fahrer aufgenommen werden können, so dass das Erfassen der dargestellten Informationen nicht zu einer Ablenkung des Fahrers während der Fahrt führt. Ferner soll die Bedienung so intuitiv, einfach und schnell durchführbar sein, dass der Fahrer die Einrichtungen des Fahrzeugs, deren Informationen von der Anzeigeeinrichtung dargestellt werden, auch während der Fahrt bedienen kann. Die Art der Bedienung und die mit der Bedienung verbundene Informationsdarstellung in einem Fahrzeug tragen somit zur Sicherheit beim Führen dieses Fahrzeugs bei.

Aus der DE 10 2007 029 602 A1 ist ein Verfahren und eine Vorrichtung zum Bedienen in einer in einem Fahrzeug befindlichen Einrichtung bekannt. Bei dem in dieser Druckschrift beschriebenen Verfahren werden vor einem Mitfahrer des Fahrzeugs auf eine Projektionsfläche die Bedienfelder und die Anzeige einer Einrichtung im Fahrzeug projiziert und die Benutzereingaben erfasst. Entsprechend umfasst die Vorrichtung eine Projektionseinrichtung und mindestens eine Projektionsfläche, die mit optischen oder drucksensitiven Sensoren zur Erfassung von Benutzereingaben ausgestattet ist, die zu einer Einrichtung im Fahrzeug übertragen werden.

Aus der DE 10 2008 023 405 A1 ist ein Kraftfahrzeug und ein Display zur Darstellung veränderlicher Informationen und einem räumlich getrennt von dem Display angeordneten Bedienfeld mit zumindest zwei Bedienelementen zur Bedienung zumindest je einer Funktion des Kraftfahrzeugs bekannt. In diesem Fall umfasst das Kraftfahrzeug eine Anzeigesteuerung zur Anzeige eines in Abhängigkeit von der Ausrichtung einer Hand eines Bedieners zu dem Bedienfeld ausgerichteten Abbildes des Bedienfeldes in einem mittels des Displays abgebildeten Displaybereich.

Aus der DE 10 2006 043 208 A1 ist ein Touchscreen bekannt, der eine sensitive Bedienfläche zum Einstellen bestimmter Funktionen aufweist. Um die Bedienung zu vereinfachen, ist wenigstens ein mechanisches Stellelement über der sensitiven Bedienfläche angeordnet, das einen Auslöser aufweist, der bei einem Bewegen des Stellelements auf die sensitive Bedienfläche zur Funktionseinstellung einwirkt.

Schließlich ist aus der DE 10 2007 052 343 A1 ein Verfahren zum Anzeigen von Daten in einem Fahrzeug bekannt, bei dem in einem ersten Anzeigebereich einer Anzeigevorrichtung Informationen dargestellt werden, die Einrichtungen des Fahrzeugs betreffen, und in einem zweiten Anzeigebereich der oder einer weiteren Anzeigevorrichtung Prozesse visualisiert werden, die in Einrichtungen des Fahrzeugs ablaufen. In diesem Fall ist der erste Anzeigebereich im primären Sichtbereich des Fahrers des Fahrzeugs angeordnet. Der zweite Anzeigebereich ist hingegen außerhalb des primären Sichtbereichs des Fahrers angeordnet. Er ist in Reichweite des Fahrers angeordnet. Die Anzeigevorrichtung, welche diesen Anzeigebereich bereitstellt, ist insbesondere als Touchscreen ausgestaltet, d. h. es ist eine berührungsempfindliche Oberfläche vorgesehen. Schließlich ist in Reichweite des Fahrers noch ein separates mechanisches Bedienelement vorgesehen, wie z. B. ein Dreh-Drück-Schalter.

Ferner beschreibt die US 2012/0272193 A1 eine Ein- und Ausgabevorrichtung für ein Fahrzeug. Dabei ist ein Touchscreen für den Fahrer leicht erreichbar und eine Anzeigeeinheit für den Fahrer gut sichtbar angeordnet. Gemäß der D1 ist im Unterschied zum Gegenstand des neuen Anspruchs 1 keine Erfassung der Blickrichtung des Fahrers vorgesehen und dementsprechend sind die Anzeigeinhalte nicht von der Blickrichtung abhängig.

Bei der in der FR 2 915 017 beschriebenen Steuervorrichtung sind ein Touchpad und eine Anzeige vorgesehen. Dabei kann das Touchpad zwei verschiedene Bereiche aufweisen, wobei in dem einen die Position einer Berührung erkannt und in ein Koordinatensystem übertragen wird, während durch eine Eingabe in einem länglichen Bereich eine Liste durchgeblättert werden kann.

Die in der WO 2012/084123 beschriebene Anzeigevorrichtung für ein Kraftfahrzeug umfasst ein Scheibenwurzeldisplay und ein Display in der Mittelkonsole des Fahrzeugs. Eine Gestenbedienung kann dabei verwendet werden, um Zusatzinformationen von einer Anzeige des Scheibenwurzeldisplays auf das Mittendisplay zu übertragen und dort anzuzeigen.

Die WO 2012/110021 A2 beschreibt ein Verfahren zum Anzeigen von Betriebszuständen von Einrichtungen eines Fahrzeugs, wobei auf einem Display im Kombiinstrument eines Fahrzeugs Daten angezeigt werden, die anhand eines Mittendisplays ausgewählt werden können.

Es ist die Aufgabe der vorliegenden Erfindung, ein Bedienverfahren und ein Bediensystem der eingangs genannten Art bereitzustellen, die eine einfache, schnelle und intuitive Bedienung und Informationsaufnahme in einem Fahrzeug ermöglicht.

Erfindungsgemäß wird diese Aufgabe durch ein Bedienverfahren mit den Merkmalen des Anspruchs 1 und ein Bediensystem mit den Merkmalen des Anspruchs 6 gelöst. Vorteilhafte Ausgestaltungen und Weiterbildungen ergeben sich aus den abhängigen Ansprüchen.

Bei dem erfindungsgemäßen Bedienverfahren werden bei einer Berührung der berührungsempfindlichen Oberfläche auf der zweiten Anzeigefläche bei der angezeigten Schaltfläche die ersten Graphikdaten, die auf der ersten Anzeigefläche angezeigt werden, so verändert, dass auf der ersten Anzeigefläche zu der Schaltfläche gehörige Zusatzinformationen angezeigt werden.

Das erfindungsgemäße Bedienverfahren ist dadurch gekennzeichnet, dass die Blickrichtung der Person erfasst wird. Es wird dann ermittelt, ob die Person die erste oder die zweite Anzeigefläche betrachtet. Der Anzeigeinhalt der ersten und/oder zweiten Graphikdaten hängt nun davon ab, ob die Person die erste oder zweite Anzeigefläche betrachtet. Auf diese Weise kann eine noch individuellere Anpassung der Anzeigeinhalte auf den beiden Anzeigeflächen die Person erreicht werden und dieser Person auf diese Weise das Erfassen der angezeigten Informationen und die Bedienung erleichtert werden.

Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen Einrichtungen gesteuert werden, deren Bedienung von der Informationsanzeige unterstützt wird. Die Schaltflächen können somit herkömmliche mechanische Schalter ersetzen. Die Schaltflächen können beliebig für eine frei programmierbare Anzeigefläche erzeugt und von dieser angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Erst bei einer Auswahl der Schaltfläche wird die ihr zugeordnete Funktion ausgeführt.

Bei dem erfindungsgemäßen Verfahren ist die zweite Anzeigefläche als sogenannter Touchscreen ausgebildet, da auf dieser Anzeigefläche eine berührungsempfindliche Oberfläche ausgebildet ist. Dieser Touchscreen ist als Bedienelement ausgebildet. Im Gegensatz zu einem sogenannten Touchpad, bei dem keine Anzeigefläche vorgesehen ist, kann das als Touchscreen ausgebildete Bedienelement des erfindungsgemäßen Bedienverfahrens flexibel an einen Kontext angepasst werden. So können von der zweiten Anzeigefläche menüabhängige Bedienelemente mittels Schaltflächen dargestellt werden. Die zu den Schaltflächen gehörigen Zusatzinformationen werden jedoch nicht auf der zweiten Anzeigefläche angezeigt, sondern auf der ersten Anzeigefläche. Dies hat den Vorteil, dass der Nutzer zur Aufnahme der Zusatzinformationen seinen Blick nur zur ersten Anzeigefläche richten muss, die in seinem Blickfeld angeordnet ist. Des Weiteren kann die zweite Anzeigefläche relativ klein dimensioniert werden, da es nicht erforderlich ist, neben der Anzeige der Schaltflächen noch die Zusatzinformationen anzuzeigen. Dies ist bei dem begrenzten Raumangebot in einem Fahrzeug besonders vorteilhaft. Insbesondere der Bereich in Reichweite der Person, die auf dem Fahrersitz sitzt, ist sehr begrenzt.

Die erste Anzeigefläche ist insbesondere im primären Sichtbereich des Fahrers des Fahrzeugs angeordnet. Dieser "primäre Sichtbereich" wird üblicherweise so definiert, dass die Blickrichtung des Fahrers um einen Winkelbereich in einer vertikalen, in Fahrzeuglängsrichtung angeordneten Ebene um einen bestimmten Winkel α nach unten bzw. nach oben von der Horizontalen, welche die Augen des Fahrers schneidet, abweicht. Der primäre Sichtbereich des Fahrers ist dabei so definiert, dass der Winkel α kleiner als 30°, insbesondere kleiner als 20° ist. Um die erste Anzeigefläche zu betrachten, muss der Fahrer somit seinen Blick weniger als 30° bzw. 20° von der Horizontalen nach unten wenden. Dabei geht man von einer Durchschnittsgröße des Fahrers aus.

Die zweite Anzeigefläche ist hingegen in Reichweite eines Fahrzeuginsassen, der sich auf einer Sitzposition des Fahrzeugs befindet, angeordnet. Diese Reichweite umfasst den Bereich, den der Fahrzeuginsasse, insbesondere der Fahrer, der eine durchschnittliche Größe aufweist, ohne weiteres, d. h. ohne oder nur mit einer geringen Veränderung seiner Position, in einer Stellung, die er normalerweise im Fahrzeug einnimmt, erreichen kann. Um die berührungsempfindliche Oberfläche der zweiten Anzeigefläche zu berühren muss sich der Fahrzeuginsasse somit überhaupt nicht oder nur geringfügig vorbeugen.

Bei einer Ausgestaltung des erfindungsgemäßen Bedienverfahrens bleiben bei einer Berührung der berührungsempfindlichen Oberfläche bei der angezeigten Schaltfläche die zweiten Grafikdaten für die Anzeige auf der zweiten Anzeigefläche unverändert. Die berührungsempfindliche Oberfläche entspricht damit einem mechanischen Bedienelement, dessen zugeordnete Anzeige von der ersten Anzeigefläche im Blickfeld des Fahrers angezeigt wird. Dabei können die als Schaltflächen ausgebildeten Bedienelemente jedoch verändert werden. Dies ist bei mechanischen Bedienelementen nicht so flexibel möglich. Ferner ist es an dieser Ausgestaltung vorteilhaft, dass der Fahrer beim Betätigen der Schaltfläche seinen Blick nicht oder gegebenenfalls nur kurz auf die zweite Anzeigefläche richten muss. Für den Bedienvorgang reicht es aus, dass der Fahrer nur kurzzeitig seinen Blick auf die erste Anzeigefläche richtet.

Auf der ersten Anzeigefläche werden insbesondere zu der Schaltfläche gehörige Kontextinformationen als Zusatzinformationen angezeigt. Ferner kann es sich bei den Zusatzinformationen um dynamische Zusatzinformationen handeln. Sie werden somit in Abhängigkeit von der Funktion der Schaltfläche und/oder dem Kontext oder der Bediensituation im Fahrzeug verändert.

Gemäß einer weiteren Ausgestaltung des erfindungsgemäßen Bedienverfahrens wird die Position eines Betätigungsobjekts relativ zu der berührungsempfindlichen Oberfläche der zweiten Anzeigefläche erfasst, die erfasste Position wird in eine Position auf der ersten Anzeigefläche umgerechnet und die umgerechnete Position wird auf der ersten Anzeigefläche mittels einer Markierung angezeigt. Auch hierdurch wird vorteilhafterweise eine Bedienung mittels der berührungsempfindlichen Oberfläche der zweiten Anzeigefläche so von der Anzeige auf der ersten Anzeigefläche unterstützt, dass der Nutzer bei Eingaben eines Bedienvorgangs nicht oder nur kurzzeitig die Anzeige auf der zweiten Anzeigefläche betrachten muss. Bei der Umrechnung kann insbesondere der Anzeigeinhalt auf der ersten Anzeigefläche berücksichtigt werden. Auf diese Weise ist es möglich beispielsweise eine Markierung für die Position eines Betätigungsobjekts auf der ersten Anzeigefläche anzuzeigen, die zum einen relativ zu dem auf der ersten Anzeigefläche wiedergegebenen Anzeigeinhalt der zweiten Anzeigefläche und zum anderen relativ zu der bisherigen Anzeige auf der ersten Anzeigefläche dargestellt wird.

Bei dem erfindungsgemäßen Bediensystem sind bei einer Berührung der berührungsempfindlichen Oberfläche auf der zweiten Anzeigefläche bei einer angezeigten Schaltfläche die ersten Graphikdaten mittels der Steuervorrichtung so veränderbar, dass auf der ersten Anzeigefläche zu der Schaltfläche gehörige Zusatzinformationen angezeigt werden. Das erfindungsgemäße Bediensystem ist dadurch gekennzeichnet, dass die Blickrichtung der Person erfassbar ist und ermittelbar ist, ob die Person die erste oder zweite Anzeigefläche betrachtet, und dass der Anzeigeinhalt der ersten und/oder zweiten Graphikdaten davon abhängt, ob die Person die erste oder zweite Anzeigefläche betrachtet. Das erfindungsgemäße Bediensystem ist insbesondere ausgebildet, das vorstehend beschriebene Bedienverfahren auszuführen. Es bietet daher dieselben Vorteile wie das erfindungsgemäße Bedienverfahren.

Die erste Anzeigefläche ist insbesondere im sogenannten Kombiinstrument des Fahrzeugs angeordnet. Dieses befindet sich hinter dem Lenkrad in Blickrichtung des Fahrers. Die zweite Anzeigefläche mit der berührungsempfindlichen Oberfläche ist insbesondere in der Mittelkonsole des Fahrzeugs angeordnet.

Gemäß einer Ausgestaltung des erfindungsgemäßen Bediensystems umfasst dieses eine Blickrichtungserfassungseinrichtung zum Erfassen der Blickrichtung der Person. Mittels der Blickrichtungserfassungseinrichtung ist ermittelbar, ob die Person die erste oder zweite Anzeigefläche betrachtet. Mittels der Steuervorrichtung ist dann der Anzeigeinhalt der ersten und/oder zweiten Graphikdaten in Abhängigkeit davon erzeugbar, ob die Person die erste oder zweite Anzeigefläche betrachtet.

Die berührungsempfindliche Oberfläche ist insbesondere für eine kapazitive Wechselwirkung mit einem Betätigungsobjekt ausgebildet. Es wird somit ein kapazitiver Touchscreen bereitgestellt, welcher sehr empfindlich auf Berührungen des Nutzers reagiert.

Das Bediensystem ist insbesondere in einem Kraftfahrzeug vorgesehen. Die Erfindung betrifft schließlich ein Fahrzeug mit einem solchen Bediensystem.

Die Erfindung wird nun anhand eines Ausführungsbeispiels mit Bezug zu den Zeichnungen erläutert.
- Figur 1: zeigt schematisch ein Ausführungsbeispiel des erfindungsgemäßen Bediensystems und
- Die Figuren 2a und 2b: zeigen Anzeigen auf den Anzeigeflächen des Bediensystems, die von einem Ausführungsbeispiel des erfindungsgemäßen Verfahrens erzeugt werden.

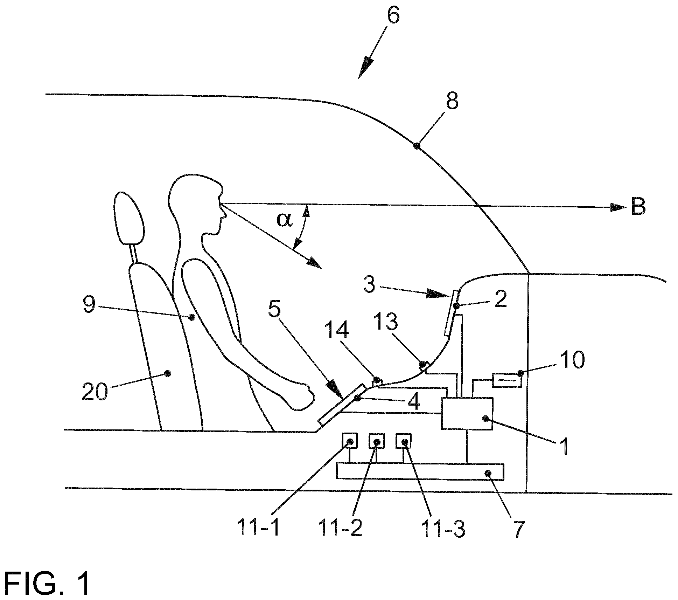

Zunächst wird der prinzipielle Aufbau des erfindungsgemäßen Bediensystems mit Bezug zu Figur 1 erläutert:
Das Bediensystem umfasst eine zentrale Steuervorrichtung 1. Diese ist mit einer ersten Anzeigevorrichtung 2 gekoppelt, welche eine Anzeigefläche 3 aufweist. Die Steuervorrichtung 1 erzeugt erste Grafikdaten, die auf der Anzeigefläche 3 angezeigt werden können. Die Anzeigefläche 3 kann von einem Display, insbesondere einem Flüssigkristalldisplay oder einem Plasmadisplay, beliebiger Bauart bereitgestellt werden. Ferner kann die Anzeigefläche 3 von einem Display mit organischen Leuchtdioden bereitgestellt werden.

Die erste Anzeigefläche 3 ist im Kombiinstrument unterhalb dem Beginn der Windschutzscheibe 8 des Fahrzeugs 6 angeordnet. Die Anzeigefläche 3 liegt damit im primären Sichtbereich des Fahrers 9. Dieser "primäre Sichtbereich" wird üblicherweise so definiert, dass die Blickrichtung B des Fahrers 9, der auf dem Fahrersitz 20 sitzt, von einem Winkelbereich in einer vertikalen, in Fahrzeuglängsrichtung angeordneten Ebene um einen bestimmten Winkel α nach unten bzw. nach oben von der Horizontalen, welche die Augen des Fahrers 9 schneidet, abweicht. Der primäre Sichtbereich des Fahrers 9 ist dabei so definiert, dass der Winkel α kleiner als 30°, insbesondere kleiner als 20° ist. Um die Anzeigefläche 3 zu betrachten, muss der Fahrer 9 somit seinen Blick um weniger als 30° bzw. 20° von der Horizontalen nach unten wenden. Dabei geht man von einer Durchschnittsgröße des Fahrers 9 aus.

Des Weiteren ist die Steuervorrichtung 1 mit einer zweiten Anzeigevorrichtung 4 verbunden, welche eine zweite Anzeigefläche 5 bereitstellt. Die zweite Anzeigefläche 5 ist separat von der ersten Anzeigefläche 3 in der Mittelkonsole des Fahrzeugs 6 angeordnet. Die Steuervorrichtung 1 erzeugt für die zweite Anzeigefläche 5 zweite Grafikdaten zur Informationsdarstellung. Die zweite Anzeigevorrichtung 4 umfasst eine berührungsempfindliche Oberfläche auf der Anzeigefläche 5, so dass ein so genannter Touchscreen bereitgestellt wird, insbesondere ein kapazitiver Touchscreen. Auf der zweiten Anzeigefläche 5 werden Schaltflächen dargestellt, welche der Bedienung dienen.

Die zweite Anzeigefläche 5 mit der berührungsempfindlichen Oberfläche ist in Reichweite des Fahrers 9 angeordnet. Die Reichweite umfasst den Bereich, den der auf dem Fahrersitz 20 sitzende Fahrer 9, der eine durchschnittliche Größe aufweist, ohne weiteres, d. h. ohne oder nur mit einer geringen Veränderung seiner Position, in einer Stellung, die er normalerweise beim Fahren einnimmt, greifen kann. Um die berührungsempfindliche zweite Anzeigefläche 5 zu berühren, muss sich der Fahrer 9 somit insbesondere überhaupt nicht oder nur geringfügig vorbeugen. Auch die zweite Anzeigefläche 5 kann von einem Display, insbesondere einem Flüssigkristalldisplay oder einem Plasmadisplay, beliebiger Bauart bereitgestellt werden.

Das Bediensystem weist des Weiteren eine Blickrichtungserfassungseinrichtung 13 auf, mit welcher die Blickrichtung der Person 9, welche auf dem Fahrersitz 20 sitzt, d. h. die Blickrichtung des Fahrers 9, erfassbar ist. Die Blickrichtungserfassungseinrichtung 13 ist mit der Steuervorrichtung 1 verbunden. Anhand der von der Blickrichtungserfassungseinrichtung 13 übertragenen Daten ermittelt die Steuervorrichtung 1, ob der Fahrer 9 die erste Anzeigefläche 3 oder die zweite Anzeigefläche 5 betrachtet. Sie kann die für die Anzeigeflächen 3 und 5 erzeugten Graphikdaten in Abhängigkeit davon erzeugen, ob der Fahrer 9 die erste Anzeigefläche 3 oder die zweite Anzeigefläche 5 betrachtet.

Bei der zweiten Anzeigefläche 5 kann gegebenenfalls. noch ein mechanisches Bedienelement 14 vorgesehen sein, mittels welchem weiterer Eingaben vorgenommen werden können.

Die Steuervorrichtung 1 ist ferner mit einem Datenbus 7 des Fahrzeugs 6 gekoppelt. Die Einrichtungen 11-1, 11-2, 11-3 des Fahrzeugs 6, welche mittels den Anzeigevorrichtungen 2 und 4 bedient werden sollen, sind auch mit diesem Datenbus 7 gekoppelt. Beispielsweise kann ein Navigationssystem 11-1, ein Multimediasystem 11-2 und eine Telekommunikationseinrichtung 11-3 vorgesehen sein. Ferner ist es auch möglich, dass einige Fahrzeugeinrichtungen 11-1, 11-2, 11-3 direkt mit der Steuervorrichtung 1 gekoppelt sind. Von den Fahrzeugeinrichtungen 11-1, 11-2, 11-3 werden Daten gegebenenfalls über den Datenbus 7 an die Steuervorrichtung 1 übertragen. Dort werden die Daten verarbeitet. Es werden ferner Grafikdaten erzeugt, die von den Anzeigeflächen 3 und 5 der Anzeigevorrichtungen 2 und 4 grafisch wiedergegeben werden.

Schließlich ist die Steuervorrichtung 1 mit einem Speicher 10 verbunden, aus welchem Daten ausgelesen werden können. Auf dem Speicher 10 können vielfältige Daten, die für die Verarbeitung der von der Steuervorrichtung 1 empfangenen Daten erforderlich sind, gespeichert sein.

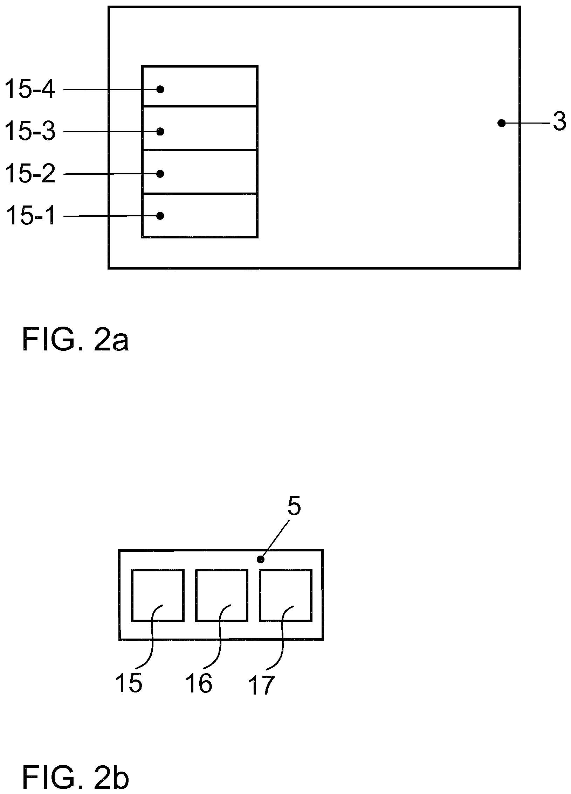

Im Folgenden wird das erfindungsgemäße Bedienverfahren mit Bezug zu den Figuren 2a und 2b erläutert. Das Bedienverfahren kann von dem vorstehend beschriebenen Bediensystem ausgeführt werden.

Die Steuervorrichtung 1 erzeugt für die Anzeige auf der ersten Anzeigefläche 3 im Kombiinstrument des Fahrzeugs 6 an sich bekannte Darstellungen beispielsweise für die Rundinstrumente und das Navigationssystem 11-1 des Fahrzeugs 6. Bei einem aktiven Navigations-system 11-1 werden ferner auf der zweiten Anzeigefläche 5 Schaltflächen 15 bis17 angezeigt, welche der Bedienung des Navigationssystems 11-1 dienen. Ist im Kombiinstrument des Fahrzeugs 6 die Anzeige für eine andere Funktionseinrichtung des Fahrzeugs 6 aktiv, wie beispielsweise eines Fahrerassistenzsystems, werden andere Schaltflächen auf der zweiten Anzeigefläche 5 angezeigt, die dieser anderen Funktionseinrichtung zugeordnet sind.

Die Schaltflächen 15 bis 17 ersetzen herkömmliche mechanische Bedienelemente, die jedoch flexibel geändert werden können. Wenn der Fahrer 9 beispielsweise mit seiner Fingerspitze die Schaltfläche 15 berührt, wird dies von der Steuervorrichtung 1 erfasst. Daraufhin verändert die Steuervorrichtung 1 die Grafikdaten für die Anzeige auf der ersten Anzeigefläche 3 derart, dass auf der ersten Anzeigefläche 3 zu der Schaltfläche 15 gehörige Zusatzinformationen 15-1 bis 15-4 angezeigt werden. Diese Zusatzinformationen 15-1 bis 15-4 werden dynamisch in Abhängigkeit von dem aktuellen Zustand des Navigationssystem 11-1 gewählt. Sie stellen insbesondere Kontextinformationen zu der Schaltfläche 15 dar.

Die Anzeige auf der zweiten Anzeigefläche 5 bleibt auch bei der Berührung der Schaltfläche 15 unverändert. Ferner kann die Position eines Betätigungsobjekts, welches die berührungsempfindliche Oberfläche auf der zweiten Anzeigefläche 5 berührt, d.h. die Position der Fingerspitze des Nutzers, welcher die berührungsempfindliche Oberfläche berührt, anhand einer Markierung auf der ersten Anzeigefläche 3 dargestellt werden. Befindet sich beispielsweise die Fingerspitze in der Mitte der Schaltfläche 15, kann die Markierung in der Mitte der Zusatzinformationen 15-1 bis 15-4 angezeigt werden. Wandert die Fingerspitze in Richtung der Schaltfläche 16, kann auch die Markierung bei der Darstellung gemäß Figur 2a auf der ersten Anzeigefläche 3 nach rechts wandern. Wenn die Fingerspitze dann die Schaltfläche 16 berührt, verändert die Steuervorrichtung 1 die Grafikdaten für die Anzeige auf der ersten Anzeigefläche 3 derart, dass nicht mehr die zu der Schaltfläche 15 gehörigen Zusatzinformationen 15-1 bis 15-4 angezeigt werden, sondern Zusatzinformationen, die der Schaltfläche 16 zugeordnet sind.

Erfindungsgemäß ist die Blickrichtungserfassungseinrichtung 13 aktiviert, es wird die Blickrichtung des Fahrers 9 erfasst und es wird ermittelt, ob der Fahrer 9 die erste oder zweite Anzeigefläche 3,5, insbesondere die erste Anzeigefläche 3, betrachtet. Falls der Fahrer 9 die erste Anzeigefläche 3 nicht betrachtet, werden die Zusatzinformationen 15-1 bis 15-4 nicht mehr angezeigt, und es wird wieder die ursprüngliche Anzeige für das Kombiinstrument auf der ersten Anzeigefläche 3 angezeigt.

Es wird darauf hingewiesen, dass das Bediensystem und das Bedienverfahren nicht nur in Verbindung mit dem Fahrer 9 eines Fahrzeugs eingesetzt werden kann, sondern auch von anderen Fahrzeuginsassen des Fahrzeugs, die auf anderen Sitzen des Fahrzeugs sitzen.

### BEZUGSZEICHENLISTE

- 1: Steuervorrichtung
- 2: erste Anzeigevorrichtung
- 3: erste Anzeigefläche
- 4: zweite Anzeigevorrichtung
- 5: zweite Anzeigefläche
- 6: Fahrzeug
- 7: Datenbus
- 8: Windschutzscheibe
- 9: Fahrer
- 10: Speicher
- 11-1: Navigationssystem
- 11-2: Multimediasystem
- 11-3: Telekommunikationssystem
- 13: Blickrichtungserfassungseinrichtung
- 14: mechanisches Bedienelement
- 15: Schaltfläche
- 15-1 bis 15-4: Zusatzinformationen
- 16: Schaltfläche
- 17: Schaltfläche
- 20: Fahrersitz

## Patentansprüche

1. Bedienverfahren für ein Fahrzeug (6), bei dem
- auf einer ersten Anzeigefläche (3), die im Innenraum des Fahrzeugs (6) im Blickfeld einer Person (9) angeordnet ist, die auf einem Fahrersitz (20) des Fahrzeugs (6) sitzt, erste Graphikdaten angezeigt werden,
- auf einer zweiten Anzeigefläche (5), die eine berührungsempfindliche Oberfläche aufweist und die getrennt von der ersten Anzeigefläche (3) in Reichweite der Person (9) angeordnet ist, die auf dem Fahrersitz (20) sitzt, zweite Graphikdaten angezeigt werden, die zumindest eine Schaltfläche darstellen, und
- bei einer Berührung der berührungsempfindlichen Oberfläche auf der zweiten Anzeigefläche (5) bei der angezeigten Schaltfläche (15) die ersten Graphikdaten, die auf der ersten Anzeigefläche (3) angezeigt werden, so verändert werden, dass auf der ersten Anzeigefläche (3) zu der Schaltfläche (15) gehörige Zusatzinformationen (15-1 bis 15-4) angezeigt werden,
**dadurch gekennzeichnet,**
**dass** die Blickrichtung der Person (9) erfasst wird und ermittelt wird, ob die Person (9) die erste oder zweite Anzeigefläche (3, 5) betrachtet, und dass der Anzeigeinhalt der ersten und/oder zweiten Graphikdaten davon abhängt, ob die Person (9) die erste oder zweite Anzeigefläche (3, 5) betrachtet.

2. Bedienverfahren nach Anspruch 1,
**dadurch gekennzeichnet,**
**dass** bei einer Berührung der berührungsempfindlichen Oberfläche bei der angezeigten Schaltfläche (15) die zweiten Graphikdaten für die Anzeige auf der zweiten Anzeigefläche (5) unverändert bleiben.

3. Bedienverfahren nach Anspruch 1 oder 2,
**dadurch gekennzeichnet,**
**dass** auf der ersten Anzeigefläche (3) zu der Schaltfläche (15) gehörige Kontextinformationen als Zusatzinformationen (15-1 bis 15-4) angezeigt werden.

4. Bedienverfahren nach einem der vorhergehenden Ansprüche,
**dadurch gekennzeichnet,**
**dass** die Zusatzinformationen (15-1 bis 15-4) dynamische Zusatzinformationen sind.

5. Bedienverfahren nach einem der vorhergehenden Ansprüche,
**dadurch gekennzeichnet,**
**dass** die Position eines Betätigungsobjekts relativ zu der berührungsempfindlichen Oberfläche der zweiten Anzeigefläche (5) erfasst wird, die erfasste Position in eine Position auf der ersten Anzeigefläche (3) umgerechnet wird und die umgerechnete Position auf der ersten Anzeigefläche (3) mittels einer Markierung angezeigt wird.

6. Bediensystem für ein Fahrzeug (6) mit
- einer ersten Anzeigefläche (3), die im Innenraum des Fahrzeugs (6) im Blickfeld einer Person (9) angeordnet ist, die auf einem Fahrersitz (20) des Fahrzeugs (6) sitzt,
- einer zweiten Anzeigefläche (5), die getrennt von der ersten Anzeigefläche (3) im Innenraum des Fahrzeugs (6) in einem Greifbereich der Person (9) angeordnet ist, die auf dem Fahrersitz (20) des Fahrzeugs (6) sitzt, und auf der eine berührungsempfindliche Oberfläche für Eingaben der Person (9) ausgebildet ist,
- einer Steuervorrichtung (1), die mit der ersten und zweiten Anzeigefläche (3, 5) gekoppelt ist, mittels welcher erste und zweite Graphikdaten für die Anzeigen auf den Anzeigeflächen (3, 5) erzeugbar sind und mittels welcher Eingaben über die berührungsempfindliche Oberfläche erfassbar sind, wobei die zweiten Graphikdaten für die zweite Anzeigefläche (5) zumindest eine Schaltfläche (15) darstellen, und
- bei einer Berührung der berührungsempfindlichen Oberfläche auf der zweiten Anzeigefläche (5) bei einer angezeigten Schaltfläche (15) die ersten Graphikdaten mittels der Steuervorrichtung (1) so veränderbar sind, dass auf der ersten Anzeigefläche (3) zu der Schaltfläche (15) gehörige Zusatzinformationen angezeigt werden,
**dadurch gekennzeichnet,**
**dass** die Blickrichtung der Person (9) erfassbar ist und ermittelbar ist, ob die Person (9) die erste oder zweite Anzeigefläche (3, 5) betrachtet, und dass der Anzeigeinhalt der ersten und/oder zweiten Graphikdaten davon abhängt, ob die Person (9) die erste oder zweite Anzeigefläche (3, 5) betrachtet.

7. Bediensystem nach Anspruch 6,
**dadurch gekennzeichnet,**
**dass** die erste Anzeigefläche (3) im Kombiinstrument des Fahrzeugs (6) angeordnet ist.

8. Bediensystem nach Anspruch 6 oder 7,
**dadurch gekennzeichnet,**
**dass** die zweite Anzeigefläche (5) mit der berührungsempfindlichen Oberfläche in der Mittelkonsole des Fahrzeugs (6) angeordnet ist.

9. Bediensystem nach einem der Ansprüche 6 bis 8,
**dadurch gekennzeichnet,**
**dass** die berührungsempfindliche Oberfläche für eine kapazitive Wechselwirkung mit einem Betätigungsobjekt ausgebildet ist.

## Claims

1. An operating method for a vehicle (6), in which
- on a first display panel (3), which is arranged in the interior of the vehicle (6) in the field of vision of a person (9) sitting on a driving seat (20) of the vehicle (6), first graphic data are displayed,
- on a second display panel (5), which has a touch-sensitive surface and is arranged separate from the first display panel (3) within the reach of the person (9) sitting on the driving seat (20), second graphic data are displayed, which show at least one button, and
- when the touch-sensitive surface on the second display panel (5) is touched, at the displayed button (15) the first graphic data that are displayed on the first display panel (3) are so changed that additional information (15-1 to 15-4) belonging to the button (15) is displayed on the first display panel (3),
**characterized in that**
the direction of vision of the person (9) is acquired and it is detected whether the person (9) is looking at the first or second display panel (3, 5), and **characterized in that** the display content of the first and/or the second graphic data depends on whether the person (9) is looking at the first or second display panel (3, 5).

2. The operating method according to claim 1,
**characterized in that**
when the touch-sensitive surface is touched, at the displayed button (15) the second graphic data for display on the second display panel (5) remain unchanged.

3. The operating method according to claim 1 or 2,
**characterized in that**
on the first display panel (3) context information belonging to the button (15) is displayed as additional information (15-1 to 15-4).

4. The operating method according to one of the preceding claims,
**characterized in that**
the additional information (15-1 to 15-4) is dynamic additional information.

5. The operating method according to one of the preceding claims,
**characterized in that**
the position of an operating object in relation to the touch-sensitive surface of the second display panel (5) is acquired, the acquired position is converted into a position on the first display panel (3) and the converted position is displayed on the first display panel (3) by a marking.

6. An operating system for a vehicle (6) with
- a first display panel (3) that is arranged in the interior of the vehicle (6) in the field of vision of a person (9) sitting on a driving seat (20) of the vehicle (6),
- a second display panel (5) that is arranged separate from the first display panel (3) in the interior of the vehicle (6) within the reach of the person (9) sitting on the driving seat (20) of the vehicle (6) and on which a touch-sensitive surface for inputs of the person (9) is configured,
- a control device (1) that is coupled with the first and second display panel (3, 5) by means of which first and second graphic data are generatable for the displays on the display panels (3, 5) and by means of which inputs are acquirable via the touch-sensitive surface, wherein the second graphic data constitute at least one button (15) for the second display panel (5), and
- when the touch-sensitive surface on the second display panel (5) is touched, at a displayed button (15) the first graphic data are so changeable by means of the control device (1) that additional information belonging to the button (15) is displayed on the first display panel (3),
**characterized in that**
the direction of vision of the person (9) is acquirable and it is detectable whether the person (9) is looking at the first or second display panel (3, 5), and **characterized in that** the display content of the first and/or the second graphic data depends on whether the person (9) is looking at the first or second display panel (3, 5).

7. The operating system according to claim 6,
**characterized in that**
the first display panel (3) is arranged in the instrument cluster of the vehicle (6).

8. The operating system according to claim 6 or 7,
**characterized in that**
the second display panel (5) is arranged with the touch-sensitive surface in the centre console of the vehicle (6).

9. The operating system according to one of claims 6 to 8,
**characterized in that**
the touch-sensitive surface is configured for a capacitive interaction with an operating object.

## Revendications

1. Procédé de commande d'un véhicule (6), dans lequel
- sur une première surface d'affichage (3), qui est agencée dans l'habitacle du véhicule (6) dans le champ de vision d'une personne (9) assise sur un siège conducteur (20) du véhicule (6), des premières données graphiques sont affichées,
- sur une deuxième surface d'affichage (5), qui comporte une surface tactile et qui est agencée séparément de la première surface d'affichage (3) à portée de la personne (9) assise sur le siège conducteur (20), des deuxièmes données graphiques sont affichées, au moins représentant un bouton, et
- lorsque la surface tactile est touchée sur la deuxième surface d'affichage (5) sur le bouton affiché (15), les premières données graphiques qui sont affichées sur la première surface d'affichage (3) sont modifiées de sorte que les informations supplémentaires (15-1 à 15-4) appartenant au bouton (15) soient affichées sur la première surface d'affichage (3),
**caractérisé en ce que**
la ligne de visée de la personne (9) est détectée et on détermine si la personne (9) regarde la première ou la deuxième surface d'affichage (3, 5), et **en ce que** le contenu d'affichage des première et/ou deuxième données graphiques dépend du fait si la personne (9) regarde la première ou la deuxième surface d'affichage (3, 5).

2. Procédé de commande selon la revendication 1,
**caractérisé en ce que**,
lorsque la surface tactile est touchée sur le bouton affiché (15), les deuxièmes données graphiques pour l'affichage sur la deuxième surface d'affichage (5) restent inchangées.

3. Procédé de commande selon la revendication 1 ou 2,
**caractérisé en ce que**
les informations de contexte appartenant au bouton (15) sont affichées en tant qu'informations supplémentaires (15-1 à 15-4) sur la première surface d'affichage (3).

4. Procédé de commande selon l'une des revendications précédentes,
**caractérisé en ce que**
les informations supplémentaires (15-1 à 15-4) sont des informations supplémentaires dynamiques.

5. Procédé de commande selon l'une des revendications précédentes,
**caractérisé en ce que**
la position d'un objet d'actionnement par rapport à la surface tactile de la deuxième surface d'affichage (5) est détectée, la position détectée est convertie en une position sur la première surface d'affichage (3) et la position convertie sur la première surface d'affichage (3) est affichée au moyen d'un marqueur.

6. Système de commande pour un véhicule (6) avec
- une première surface d'affichage (3), qui est agencée dans l'habitacle du véhicule (6) dans le champ de vision d'une personne (9) assise sur un siège conducteur (20) du véhicule (6),
- une deuxième surface d'affichage (5), qui est agencée séparément de la première surface d'affichage (3) dans l'habitacle du véhicule (6) dans une zone de préhension de la personne (9) assise sur le siège conducteur (20) du véhicule (6), et sur laquelle est formée une surface tactile pour les entrées de la personne (9),
- un contrôleur (1), qui est couplé aux première et deuxième surfaces d'affichage (3, 5), au moyen duquel des première et deuxième données graphiques pour les affichages sur les surfaces d'affichage (3, 5) peuvent être générées et au moyen duquel des entrées peuvent être détectées via la surface tactile, les deuxièmes données graphiques pour la deuxième surface d'affichage (5) représentant au moins un bouton (15), et
- lorsque la surface tactile est touchée sur la deuxième surface d'affichage (5) sur un bouton affiché (15), les premières données graphiques peuvent être modifiées au moyen du contrôleur (1) de sorte que des informations supplémentaires appartenant au bouton (15) soient affichées sur la première surface d'affichage (3),
**caractérisé en ce que**
la ligne de visée de la personne (9) peut être détectée et on peut déterminer si la personne (9) regarde la première ou la deuxième surface d'affichage (3, 5), et **en ce que** le contenu d'affichage des première et/ou deuxième données graphiques dépend du fait si la personne (9) regarde la première ou la deuxième surface d'affichage (3, 5).

7. Système de commande selon la revendication 6,
**caractérisé en ce que**
la première surface d'affichage (3) est agencée dans l'instrument combiné du véhicule (6).

8. Système de commande selon la revendication 6 ou 7,
**caractérisé en ce que**
la deuxième surface d'affichage (5) avec la surface tactile est agencée dans la console centrale du véhicule (6).

9. Système de commande selon l'une des revendications 6 à 8,
**caractérisé en ce que**
la surface tactile est formée pour une interaction capacitive avec un objet d'actionnement.
